# EUROPÄISCHE PATENTANMELDUNG

(11) **EP 1 795 323 A1**
(43) Veröffentlichungstag der Anmeldung: **13.06.2007**
(21) Anmeldenummer: 05026948.9
(22) Anmeldetag: 09.12.2005
(51) Int. Cl.: B29C 39/10, B61L 9/00, G09F 9/30

(54) **Vefahren zur Herstellung einer Signalplatte und Verkehrssignal mit einer derartigen Signalplatte**

(71) Anmelder: Siemens Schweiz AG, 8047 Zürich (CH)
(72) Erfinder: Marti, Michael, 8400 Winterthur (CH)
(74) Vertreter: Fischer, Michael

(57) **Zusammenfassung**

Verfahren zur Herstellung einer Signalplatte (2,12), insbesondere einer Signalplatte für ein Eisenbahnsignal, bei dem die folgenden Schritte vorgesehen sind:
a) Bereitstellen einer der äusseren Form der Signalplatte (2,12) entsprechenden Gussform (4,14);
b) Einlegen von mindestens einem Leuchtpunkt (8) und/oder von mindestens einer Leerbuchse in die Gussform (4,14);
c) Ausgiessen der Gussform (4,14) mit einem fliessfähigen, aushärtbaren Kunststoff zur Erstellung eines Gusskörpers;
d) Aushärten des Kunststoffs; und
e) Entnehmen des Gusskörpers und im Fall von eingegossenen Leerbuchsen Einfügen von Leuchtpunkten (8) in die Leerbuchse.
Auf diese Weise kann die Signalplatte sehr einfach hergestellt werden, weil der Bearbeitungsprozess sehr stark vereinfacht ist, in dem die Leuchtpunkte und/oder die Leerbuchsen an den für sie vorgesehenen Orten positioniert und im Wege des Giessverfahrens und der nachfolgenden Aufhärtung kraft- und formschlüssig gehalten werden. Weitere Verarbeitungsschritte zur Befestigung der Leuchtpunkte und/oder der Leerbuchsen sind nicht mehr erforderlich. Es sei angemerkt, dass unter einem Leuchtpunkt ein Einsatz mit einer integrierten bzw. integrierbaren Lichtquelle (wie z.B. Glühlampe, LED) verstanden wird.

## Beschreibung

Die vorliegende Erfindung betrifft ein Verfahren zur Herstellung einer Signalplatte und ein Verkehrssignal mit einer nach dem vorstehenden Verfahren hergestellten Signalplatte.

Verkehrssignale zur Steuerung von Verkehrflüssen finden heute in vielfältiger Form Anwendung. Im Eisenbahnverkehr wird der Zugverkehr heute immer noch überwiegend mit Lichtsignalen geregelt, die unterschiedlichster Bauart sein können. Allen Lichtsignalen gemeinsam ist in der Regel eine Signalplatte, in die die Lichtpunkte eingesetzt werden. Diese Signalplatte besteht traditionell aus Metall und wird aus Stabilitätsgründen entweder mit seitlich abgebogenen Elementen und/oder mit einer zweiten tragenden Metallplatte ausgeführt. Die Durchbrüche für die einzelnen Leuchtpunkte müssen dann in der Signalplatte erstellt werden und die Leuchtpunkte anschliessend in die Durchbrüche eingesetzt und befestigt werden. Wegen der erforderlichen Metallbearbeitung ist dieses Verfahren aufwendig und macht es erforderlich, an der Signalplatte weitere Elemente für die Befestigung der Leuchtpunkte vorzusehen.

Der vorliegenden Erfindung liegt daher die Aufgabe zugrunde, ein Verfahren anzugeben, mit dem ein Verkehrssignal mit einem geringeren Aufwand bereitgestellt werden kann. Weiter soll ein diesbezügliches Verkehrssignal angegeben werden.

Diese Aufgabe wird bezüglich des Verfahrens erfindungsgemäss durch ein Verfahren zur Herstellung einer Signalplatte, insbesondere einer Signalplatte für ein Eisenbahnsignal, gelöst, bei dem die nachfolgenden Verfahrensschritte umfasst sind:
a) Bereitstellen einer der äusseren Form der Signalplatte entsprechenden Gussform;
b) Einlegen von mindestens einem Leuchtpunkt und/oder von mindestens einer Leerbuchse in die Gussform;
c) Ausgiessen der Gussform mit einem fliessfähigen, aushärtbaren Kunststoff zur Erstellung eines Gusskörpers;
d) Aushärten des Kunststoffs; und
e) Entnehmen des Gusskörpers und im Fall von eingegossenen Leerbuchsen Einfügen von Leuchtpunkten in die Leerbuchse.

Auf diese Weise kann die Signalplatte sehr einfach hergestellt werden, weil der Bearbeitungsprozess sehr stark vereinfacht ist, in dem die Leuchtpunkte und/oder die Leerbuchsen an den für sie vorgesehenen Orten positioniert und im Wege des Giessverfahrens und der nachfolgenden Aufhärtung kraft- und formschlüssig gehalten werden. Weitere Verarbeitungsschritte zur Befestigung der Leuchtpunkte und/oder der Leerbuchsen sind nicht mehr erforderlich. Es sei angemerkt, dass unter einem Leuchtpunkt ein Einsatz mit einer integrierten bzw. integrierbaren Lichtquelle (wie z.B. Glühlampe, LED) verstanden wird.

Eine vergleichsweise einfache Anordenbarkeit der Leuchtpunkte und/oder der Leerbuchse ergibt sich, wenn der Leuchtpunkt und/oder die Leerbuchse ein im wesentlichen zylindrisches Gehäuse aufweist und in im wesentlichen senkrechter Orientierung zur Ebene der Gussform in die Gussform eingelegt wird. Grundsätzlich kann das Gehäuse aber jede beliebige Querschnittsform haben, weil entsprechend der Fliessfähigkeit des Kunststoffs eine gute Anpassung an relativ beliebige Querschnittsformen ermöglicht ist.

Um auf der einen Seite vergleichsweise wenig Kunststoff einsetzen zu müssen und auf der anderen Seite trotzdem eine hinreichend feste Verankerung des Leuchtpunkts und/oder der Leerbuchse in dem Kunststoff zu erzielen, kann es in zweckmässiger Weiterbildung der Erfindung vorgesehen sein, den Leuchtpunkt und/oder die Leerbuchse bis einer Tiefe einzugiessen, die maximal ihrem Durchmesser entspricht.

Zur Erhöhung der mechanischen Stabilität der Signalplatte kann vor dem Ausgiessen der Gussform mindestens ein strukturverstärkendes Element in die Gussform eingelegt werden. Dieses strukturverstärkende Element kann anschliessend zusammen mit dem Leuchtpunkt und/oder der Leerbuchse in einem Arbeitsgang eingegossen werden. Die Anordnung weiterer strukturverstärkender Elemente kann so vermieden werden, womit auch weitere Fertigungsschritte gegenüber den herkömmlichen aus Metall hergestellten Signalplatten entfallen können. Ein aufgrund seiner leichten Handhabbarkeit besonders bevorzugtes strukturverstärkendes Element kann beispielsweise eine Glasfasermatte sein.

Um sicher vermeiden zu können, dass der in die Gussform eingegossene Kunststoff unter den Leuchtpunkt und/oder die Leerbuchse fliesst, kann der Leuchtpunkt und/oder die Leerbuchse beim Ausgiessen der Gussform auf die Gussform gedrückt werden.

Um beispielsweise auch den Leuchtpunkt und/oder die Leerbuchse aus der Ebene der Signalplatte heraustreten zu lassen, kann die Gussform mindestens eine Ausbuchtungen aufweisen, in die der Leuchtpunkt und/oder die Leerbuchse eingelegt werden. Weiter kann die mindestens eine Ausbuchtung so geformt sein, dass aus der Ebene der Signalplatte herausragende dem Leuchtpunkt zugeordnete Formelemente, insbesondere Schutz- oder Schirmelemente, beim Ausgiessen miterzeugt werden. So können zum Beispiel Seitenblenden, Überstände oder sonstige aus der Ebene der Signalplatte herausragende Elemente direkt mit dem Giessen der Signalplatte ausgeformt werden. Gleichzeitig können diese Elemente mit dem Leuchtpunkt und/oder der Leerbuchse dauerhaft verbunden werden.

Um diese aus der Ebene der Signalplatte besonders stabil ausgestalten zu können, kann vor dem Ausgiessen der Gussform in die Ausbuchtung mindestens ein weiteres strukturverstärkendes Element eingebracht werden. Besonders geeignet hierfür ist zum Beispiel die vorstehend genannte Glasfasermatte, die in den Bereichen in die Ausbuchtung eingebogen wird, auf denen ansonsten ein Leuchtpunkt und/oder eine Leerbuchse aufliegen würde. Damit werden die Löcher in der Glasfasermatte für die Leuchtpunkte und/oder die Leerbuchse nicht als solches ausgeschnitten und die ausgeschnittenen Teile entfernt, sondern bei entsprechendem Schnitt von der Lochmitte in radialer Richtung zum Rand können die am Lochrand noch gehaltenen Segmente in die Ausbuchtung eingeschlagen und später dort mit dem Kunststoff eingegossen werden.

Hinsichtlich des Verkehrssignals wird die vorstehend genannte Ausgabe erfindungsgemäss durch ein Verkehrssignal, insbesondere Eisenbahnsignal gelöst, welches eine im Kunststoffguss erzeugte Signalplatte aufweist, in welche mindestens ein Leuchtpunkt und/oder mindestens eine Leerbuchse kraft- und formschlüssig eingegossen ist.

In vorteilhafter Weiterbildung der Erfindung zur Erzielung einer hinreichend hohen Stabilität kann in die Signalplatte mindestens ein strukturverstärkendes Element, insbesondere eine Glasfasermatte, eingegossen sein.

Ausführungsbeispiele der Erfindung werden nachfolgend anhand der Zeichnung näher erläutert. Dabei zeigen:
- Figur 1: in schematischer Darstellung die wichtigsten Schritte a) bis d) zur Herstellung einer ersten Signalplatte; und
- Figur 2: einen Längsschnitt durch eine zweite Signalplatte im Bereich eines Leuchtpunktes.

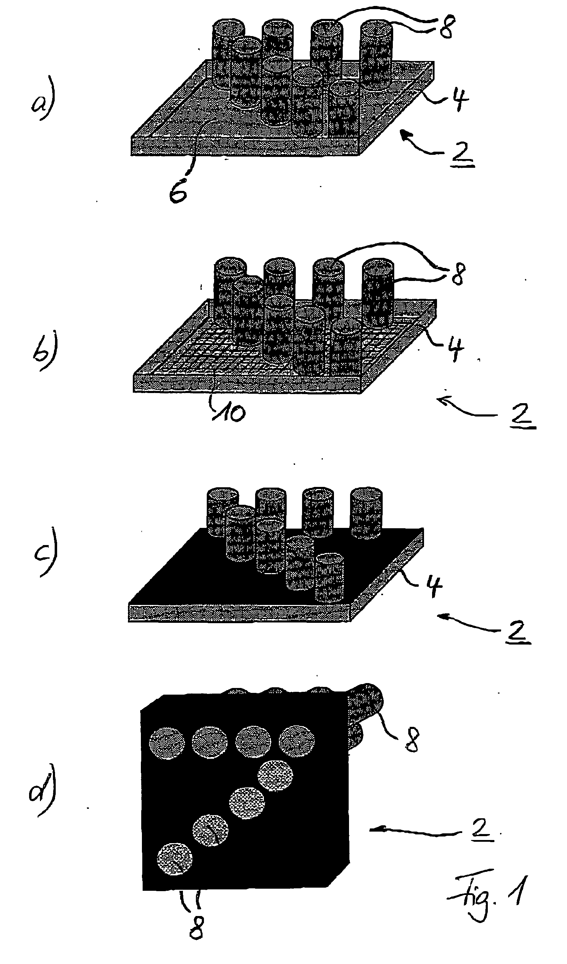

Figur 1 zeigt in einer schematischen Darstellung die wesentlichen Herstellungsschritte a) bis d) zur Erzeugung einer Signalplatte 2 gemäss der vorliegenden Erfindung. Im ersten Schritt a) wird eine der äusseren Form der Signalplatte 2 entsprechende Gussform 4 bereitgestellt, die in der Regel eine einem Verkehrsteilnehmer (nicht - dargestellt) zugewandte im wesentlichen ebene Signal fläche 6 aufweist. In diese Gussform werden Leuchtpunkte 8 an Positionen eingelegt, die dem später vorgesehenen Ort für die Leuchtpunkte innerhalb der Signalplatte 2 entsprechen. Diese Leuchtpunkte 8 können bereits die gesamte Leuchtvorrichtung und das erforderliche Anschlussmaterial umfassen. Alternativ möglich wäre es auch, anstelle der Leuchtpunkte 8 sogenannte Leerbuchsen in die Gussform 4 einzusetzen, in die dann später der Leuchtpunkt 8 eingebaut wird, beispielsweise durch Eindrehen des Leuchtpunktes 8 in ein Gewinde der Leerbuchse.

Anschliessend wird in dem Schritt b) eine Glasfasermatte 10 unter Aussparung der für die Leuchtpunkte 8 vorgesehenen Fläche in die Gussform 4 eingelegt. Diese Glasfasermatte 10 dient als strukturverstärkendes Element und macht so eine weitere Armierung der Signalplatte 2 entbehrlich. Im Schritt c) erfolgt nun das Ausgiessen der Gussform 4 mit einem fliessfähigen, aushärtbaren Kunststoff zur Erstellung eines zusammenhängenden Gusskörpers mit den integierten Leuchtpunkten 8 und der miteingegossenen Glasfasermatte 10. Hierzu eignet sich beispielsweise ein Epoxidharz, der aus einem flüssigen Harz und einem Härter gemischt, vergossen und anschliessend wärmegehärtet wird. Ergänzend oder alternativ könnte auch Polyurethan und/oder auch laminierte Carbonfasern, sogenannte Composite-Werkstoffe, verwenden werden.

Alternativ könnte auch erst ein wenig des Kunststoffs in die Gussform eingegossen, werden und die Glasfasermatte 10 auf den noch weichen Kunststoff gelegt und die Gussform 4 dann anschliessend aufgefüllt werden. Mit dem Aushärten des Kunststoffs entsteht die fertige Signalplatte 2, wie sie im Schritt d) in der Frontansicht dargestellt ist und nun aus der Gussform 4 entnommen worden ist. Im Fall von eingegossenen Leerbuchsen müssten nun noch die Leuchtpunkte 8 in die Leerbuchsen eingesetzt werden.

Wie die Figur 1 schön erkennen lässt, haben die Leuchtpunkte 8 ein im wesentlichen zylindrisches Gehäuse und sind im wesentlichen senkrecht zur Ebene der Gussform 4 in die Gussform 4 eingestellt worden. Selbstverständlich wäre es bei entsprechender Ausgestaltung der Gussform 4 auch möglich, die Leuchtpunkte 8 nicht in einem rechten Winkel aufzustellen, sondern beispielsweise leicht geneigt. Zudem kann die Gussform 4 allgemein Positionierungshilfen aufweisen, die sicherstellen, dass die Leuchtpunkte 8 immer wieder an der gleichen Stelle in der Signalplatte 2 angeordnet sind und damit identische Signalplatten einfacher herstellbar sind.

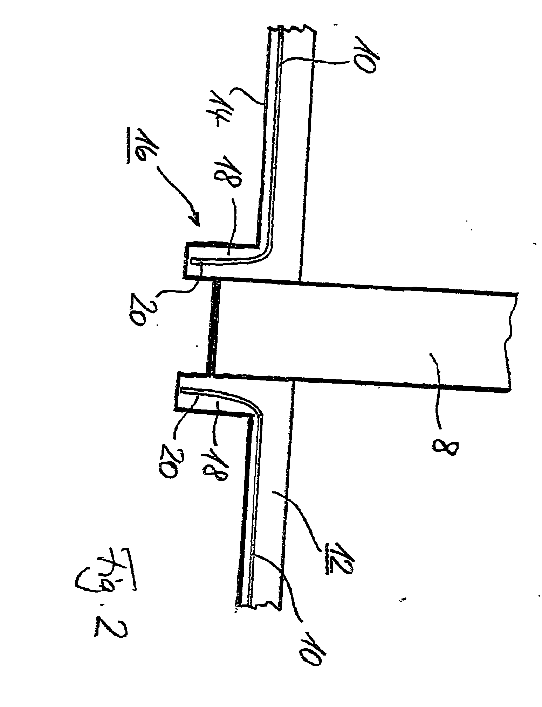

Die Grössenverhältnisse in der Figur 1, aber auch in der Figur 2 zeigen weiter deutlich, dass die Leuchtpunkte 8 bis zu einer Tiefe eingegossen sind, die weniger als ihrem Durchmesser entspricht.

In der gewählten Darstellung der Figur 1 ist jetzt nicht im Detail dargestellt, dass die Leuchtpunkte 8 beim Ausgiessen der Gussform 4 auf die Gussform 4 gedrückt werden. Hierdurch kann vermieden werden, dass flüssiger Kunststoff unter die Leuchtpunkte 8 fliesst und beispielsweise die Linse eines Leuchtpunktes 8 unbrauchbar macht.

Figur 2 zeigt nun in einem Längsschnitt im Bereich eines Leuchtpunkts 8 eine zweite Signalplatte 12, die sich noch in ihrer zugehörigen Gussform 14 befindet. Diese Gussform 14 weist eine Ausbuchtung 16 auf, in die der Leuchtpunkt 8 eingelegt ist. So ist es möglich, dass der Leuchtpunkt 8 die Ebene der Signalplatte 12 durchschneidet. Die Ausbuchtung 16 ist dabei zudem so geformt, dass aus der Ebene der Signalplatte 12 herausragende, dem Leuchtpunkt 8 zugeordnete Formelemente, im vorliegenden Fall ein Schutzschirm 18, beim Ausgiessen miterzeugt werden. Bei der Fertigung wurde auch schon vor dem Ausgiessen der Gussform 14 mindestens ein weiteres strukturverstärkendes Element in die Ausbuchtung 16 eingebracht, um im besonderen den Schutzschirm 18 ebenfalls ausreichend stabil ausgestalten zu können. Hierzu wurde vorliegend ein Bereich 20 der Glasfasermatte 10 in die Ausbuchtung 16 eingebogen, auf dem ansonsten der Leuchtpunkt 8 aufgelegen hätte.

Die vorstehend erläuterten Signalplatten 2, 14 lassen sich so in einfacher Weise in ein Verkehrssignal integrieren, wie bespielsweise ein Eisenbahnsignal. Die hierbei verwendeten Signalplatten 2, 12 sind einfach herzustellen, weil der Bearbeitungsprozess stark vereinfacht ist, indem die Leuchtpunkte 8 und/oder die Leerbuchsen an den für sie vorgesehenen Orten positioniert und im Wege des Giessverfahrens und der nachfolgenden Aushärtung kraft- und formschlüssig gehalten werden. Weitere substantielle verarbeitungsschritte zur Befestigung der Leuchtpunkte 8 und/oder der Leerbuchsen sind nicht mehr erforderlich.

## Patentansprüche

1. Verfahren zur Herstellung einer Signalplatte (2, 12), insbesondere einer Signalplatte für ein Eisenbahnsignal,
**dadurch gekennzeichnet, dass**
die folgende Schritte umfasst sind:
a) Bereitstellen einer der äusseren Form der Signalplatte (2, 12) entsprechenden Gussform (4, 14);
b) Einlegen von mindestens einem Leuchtpunkt (8) und/oder von mindestens einer Leerbuchse in die Gussform (4, 14);
c) Ausgiessen der Gussform (4, 14) mit einem fliessfähigen, aushärtbaren Kunststoff zur Erstellung eines Gusskörpers;
d) Aushärten des Kunststoffs; und
e) Entnehmen des Gusskörpers und im Fall von eingegossenen Leerbuchsen Einfügen von Leuchtpunkten (8) in die Leerbuchse.

2. Verfahren nach Anspruch 1,
**dadurch gekennzeichnet, dass**
der Leuchtpunkt (8) und/oder die Leerbuchse ein im wesentlichen zylindrisches Gehäuse aufweist und in im wesentlichen senkrechter Orientierung zur Ebene der Gussform (4, 14) in die Gussform (4, 14) eingelegt wird.

3. Verfahren nach Anspruch 1 oder 2,
**dadurch gekennzeichnet, dass**
der Leuchtpunkt (8) und/oder die Leerbuchse bis zu einer Tiefe eingegossen werden, die maximal ihrem Durchmesser entspricht.

4. Verfahren nach einem der Ansprüche 1 bis 3,
**dadurch gekennzeichnet, dass**
vor dem Ausgiessen der Gussform (4, 14) mindestens ein strukturverstärkendes Element (10) in die Gussform (4, 14) eingelegt wird.

5. Verfahren nach Anspruch 4,
**dadurch gekennzeichnet, dass**
das mindestens eine strukturverstärkende Element eine Glasfasermatte (10) ist.

6. Verfahren nach einem der Ansprüche 1 bis 5,
**dadurch gekennzeichnet, dass**
der Leuchtpunkt (8) und/oder die Leerbuchse beim dem Ausgiessen der Gussform (4, 14) auf die Gussform (14) gedrückt werden.

7. Verfahren nach einem der Ansprüche 1 bis 6,
**dadurch gekennzeichnet, dass**
die Gussform (14) mindestens eine Ausbuchtung (16) aufweist, in die der Leuchtpunkt (8) und/oder die Leerbuchse eingelegt werden.

8. Verfahren nach Anspruch 7,
**dadurch gekennzeichnet, dass**
die mindestens eine Ausbuchtung (16) so geformt ist, dass aus der Ebene der Signalplatte (2, 12) herausragende dem Leuchtpunkt (8) zugeordnete Formelemente (18), insbesondere Schutz- oder Schirmelemente, beim Ausgiessen miterzeugt werden.

9. Verfahren nach Anspruch 8,
**dadurch gekennzeichnet, dass**
vor dem Ausgiessen der Gussform (4, 14) in die Ausbuchtung mindestens ein weiteres strukturverstärkendes Element (20) eingebracht wird.

10. Verfahren nach Anspruch 9,
**dadurch gekennzeichnet, dass**
als weiteres strukturverstärkendes Element ein Bereich (20) der Glasfasermatte (10) in die Ausbuchtung (16) eingebogen wird, auf denen ansonsten ein Leuchtpunkt (8) und/oder eine Leerbuchse aufliegen würde.

11. Verkehrssignal, insbesondere Eisenbahnsignal, mit einer aus Kunststoffguss erzeugten Signalplatte (2, 12), in welche mindestens ein Leuchtpunkt (8) und/oder mindestens eine Leerbuchse kraft- und formschlüssig eingegossen ist.

12. Verkehrssignal nach Anspruch 11,
**dadurch gekennzeichnet, dass**
in die Signalplatte (2, 12) mindestens ein strukturverstärkendes Element (10, 20), insbesondere eine Glasfasermatte, eingegossen ist.
